(19) Europäisches Patentamt
European Patent Office
Office européen des brevets

(11) Veröffentlichungsnummer: **0 307 815 B1**

(12) **EUROPÄISCHE PATENTSCHRIFT**

(45) Veröffentlichungstag der Patentschrift: **08.04.92**

(51) Int. Cl.5: **C10L 1/18**, C10L 1/22

(21) Anmeldenummer: **88114756.5**

(22) Anmeldetag: **09.09.88**

# (54) Kraftstoffe für Ottomotoren.

(30) Priorität: **15.09.87 DE 3730885**
**01.10.87 DE 3733172**

(43) Veröffentlichungstag der Anmeldung:
**22.03.89 Patentblatt 89/12**

(45) Bekanntmachung des Hinweises auf die Patenterteilung:
**08.04.92 Patentblatt 92/15**

(84) Benannte Vertragsstaaten:
**AT BE CH DE ES FR GB IT LI NL SE**

(56) Entgegenhaltungen:
**FR-A- 1 258 027**
**GB-A- 1 308 046**
**US-A- 2 542 542**
**US-A- 3 506 625**
**FR-A- 2 592 658**
**GB-A- 2 129 012**
**US-A- 3 449 250**
**US-A- 4 161 452**

(73) Patentinhaber: **BASF Aktiengesellschaft**
**Carl-Bosch-Strasse 38**
**W-6700 Ludwigshafen(DE)**

(72) Erfinder: **Martischius, Franz-Dieter, Dr.**
**Neubergstrasse 73**
**W-6730 Neustadt(DE)**
Erfinder: **Rath, Hans-Peter, Dr.**
**Friedhofstrasse 7**
**W-6718 Gruenstadt(DE)**
Erfinder: **Vogel, Hans-Henning, Dr.**
**Damaschkeweg 1**
**W-6710 Frankenthal(DE)**
Erfinder: **Greif, Norbert, Dr.**
**Im Woogtal 3**
**W-6719 Bobenheim(DE)**
Erfinder: **Oppenlaender, Knut, Dr.**
**Otto-Dill-Strasse 23**
**W-6700 Ludwigshafen(DE)**
Erfinder: **Denzinger, Walter**
**Wormser Landstrasse 65**
**W-6720 Speyer(DE)**
Erfinder: **Hartmann, Heinrich, Dr.**
**Weinheimer Strasse 46**
**W-6703 Limburgerhof(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Kraftstoffe für Ottomotoren mit einem Gehalt an Copolymeren von Olefinen mit 2 bis 40 C-Atomen und/oder Cycloolefinen mit 3 bis 10 C-Atomen mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe und Olefinen mit 2 bis 40 C-Atomen und/oder Cycloolefinen mit 3 bis 10 C-Atomen mit Maleinsäureanhydrid, wobei die Carboxylgruppen der Copolymeren ganz oder teilweise in Form der Alkalimetallsalze und der gegebenenfalls verbleibende Rest der Carboxylgruppen in Form von Ester- und/oder Amidgruppen und/oder Ammoniumsalzgruppen vorliegen.

Aus der DE-OS 36 20 651 ist bekannt, zur Verhinderung oder Minderung von Abnutzungserscheinungen an den Auslaßventilen oder Ventilsitzen von Ottomotoren, den Kraftstoffen geringe Mengen von Alkalimetall- oder Erdalkalimetallsalzen von bestimmten Derivaten der Bernsteinsäure zuzusetzen. Die Verbindungen haben jedoch den Nachteil, daß sie in den Ottomotoren nicht korrosionsmindernd wirken.

Es bestand daher die Aufgabe, Stoffe zu finden, die neben der Verhinderung oder Minderung von Abnutzungserscheinungen an den Ventilen von Ottomotoren gleichzeitig die Korrosion in den Ottomotoren vermindern.

Es wurde nun überraschenderweise gefunden, daß diese Aufgabe gelöst wird mit Kraftstoffen für Ottomotoren, enthaltend 10 bis 2000 Gew.-ppm Copolymere von Olefinen mit 2 bis 40 C-Atomen und/oder Cycloolefinen mit 3 bis 10 C-Atomen mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe und Olefinen mit 2 bis 40 C-Atomen und/oder Cycloolefinen mit 3 bis 10 C-Atomen mit Maleinsäureanhydrid mit einer Gesamt-Molmasse von 500 bis 20 000 g pro Mol, wobei die Carboxylgruppen der Copolymeren ganz oder teilweise mit Alkali unter Bildung der Alkalimetallsalze umgesetzt sind und der Rest der Carboxylgruppen mit Alkoholen und/oder Aminen mit bis zu 50 C-Atomen zu den entsprechenden Ester- und/oder Amidgruppen und/oder Ammoniumsalzen umgesetzt ist.

Die neuen Kraftstoffzusätze haben den Vorteil, daß sie die Wirkung üblicher Benzinadditive in den Ottomotoren nicht beeinträchtigen und gleichzeitig das Auftreten von Abnutzungserscheinungen an den Ventilen verhindern oder zumindest stark herabsetzen und weiter überraschenderweise das Auftreten von Korrosion in den Ottomotoren beträchtlich mindern oder gar verhindern.

Die erfindungsgemäßen Kraftstoffzusätze werden zweckmäßig in zwei Verfahrensstufen hergestellt. Die erste Verfahrensstufe ist die Herstellung der Copolymeren von Olefinen mit 2 bis 40 C-Atomen und/oder Cycloolefinen mit 3 bis 10 C-Atomen mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe und Olefinen mit 2 bis 40 C-Atomen und/oder Cycloolefinen mit 3 bis 10 C-Atomen mit Maleinsäureanhydrid. In der zweiten Verfahrensstufe werden die Olefin/Maleinsäureanhydrid-Copolymeren bzw. Cycloolefin/Maleinsäureanhydrid-Copolymeren bzw. die Vinylether/Maleinsäureanhydrid-Copolymeren bzw. Vinylether/Olefin/Maleinsäureanhydrid-Copolymeren bzw. Vinylether/Cycloolefin/Maleinsäureanhydrid-Copolymeren ganz oder teilweise mit Alkali unter Bildung der Alkalimetallsalze umgesetzt. Die vollständige Umsetzung der Carboxylgruppen der Copolymeren erfolgt zweckmäßig dann, wenn die erhaltenen Alkalimetallsalze der Copolymeren bereits eine hinreichende Löslichkeit in den Kraftstoffen, denen sie zugesetzt werden sollen, aufweisen. Falls die Löslichkeit nicht ausreicht, wird man die Carboxylgruppen der Copolymeren zweckmäßig nur teilweise mit Alkali unter Bildung der Alkalimetallsalze umsetzen und den Rest der Carboxylgruppen mit Alkoholen und/oder Aminen zu den entsprechenden Ester- und/oder Amidgruppen und/oder Ammoniumsalzen umsetzen, um die hinreichende Löslichkeit zu erhalten. Um die erforderliche Löslichkeit der Kraftstoffzusätze zu erreichen, wird man weiter zweckmäßig so vorgehen, daß man bei der Herstellung der Copolymeren aus Vinylethern mit geringer Zahl von C-Atomen in der Alkyl/Cycloalkylgruppe in der zweiten Verfahrensstufe bei der weiteren Umsetzung mit Alkoholen und/oder Aminen längerkettige Alkohole und/oder Amine verwendet und/oder gegebenenfalls den Anteil der Carboxylgruppen, der mit den Alkoholen und/oder Aminen umzusetzen ist, erhöht. Entsprechend kann man bei der Verwendung von Vinylethern mit höherer Zahl von C-Atomen in der Alkyl/Cycloalkylgruppe für die Herstellung der Copolymeren in der zweiten Verfahrensstufe Alkohole und/oder Amine mit kürzeren Alkylketten verwenden bzw. den Anteil der Carboxylgruppen, der mit den Alkoholen und/oder Aminen

umzusetzen ist, erniedrigen. Entsprechendes gilt, falls die Copolymeren neben den Vinylether-Einheiten noch Olefin- und/oder Cycloolefin-Einheiten enthalten, bzw. bei den Olefin/Maleinsäureanhydrid-Copolymeren oder Cycloolefin/Maleinsäureanhydrid-Copolymeren für die verwendeten Olefine bzw. Cycloolefine.

Als carboxylgruppenhaltige Copolymere sind geeignet Copolymere von Olefinen und/oder Cycloolefinen mit Maleinsäureanhydrid sowie Copolymere von Alkylvinylethern und/oder Cycloalkylvinylethern mit Maleinsäureanhydrid sowie Copolymere, die im Molekül neben den Maleinsäureanhydrid- und Alkylvinylether- bzw. Cycloalkylvinylether-Einheiten noch Olefin- bzw. Cycloolefin-Einheiten enthalten. Vorzugsweise sind die Copolymeren streng alternierend aufgebaut, d.h. auf ein Maleinsäureanhydridmolekül folgt in der Polymerkette ein Vinylether- oder ein Cycloolefin- oder Olefinmolekül. Daher besitzen solche Copolymeren ein Molverhältnis von Maleinsäureanhydrid zu Olefin/Cycloolefinen oder von Maleinsäureanhydrid zu Vinylether oder von Maleinsäureanhydrid zu der Summe aus Vinylether und Olefin von 1:1.

Zur Herstellung der alternierenden Copolymeren aus Maleinsäureanhydrid und Vinylethern werden Alkylvinylether mit geradkettigen und verzweigten Alkylgruppen mit 1 bis 30 C-Atomen, vorzugsweise 4 bis 24 C-Atomen, und/oder Cycloalkylvinylether mit 3 bis 10 C-Atomen, vorzugsweise 4 bis 8 C-Atomen in der Cycloalkylgruppe verwendet. Als Alkylvinylether seien beispielsweise genannt Methylvinylether, Ethylvinylether, n-Propylvinylether, Isopropylvinylether, n-Butylvinylether, Isobutylvinylether, tert.-Butylvinylether, n-Pentylvinylether, n-Hexylvinylether, 2-Methylpentylvinylether, n-Heptylvinylether, n-Oktylvinylether, 2-Ethylhexylvinylether, 2,2,4-Trimethylpentylvinylether, n-Decylvinylether, Dodecylvinylether, Isododecylvinylether, n-Tridecylvinylether, Isotridecylvinylether, n-Tetradecylvinylether, n-Hexadecylvinylether, n-Octadecylvinylether, n-Eicosylvinylether, n-Docosylvinylether, n-Tetracosylvinylether, n-Hexacosylvinylether, n-Octacosylvinylether und Oleylvinylether sowie Mischungen untereinander. Als Cycloalkylvinylether seien beispielsweise genannt Cyclobutylvinylether, Cyclpentylvinylether, Cyclohexylvinylether und Cyclooctylvinylether. Als Olefine bzw. Cycloolefine, die als solche oder in Kombination mit Alkylvinylethern und/oder Cycloalkylvinylethern eingesetzt werden, sind geradkettige und bzw. oder verzweigte Olefine mit 2 bis 40 C-Atomen, vorzugsweise 4 bis 30 C-Atomen und Cycloolefine mit 3 bis 10 C-Atomen, vorzugsweise 4 bis 8 C-Atomen, geeignet. Von den Olefinen sind solche besonders geeignet, bei denen die Doppelbindung in der 1-Stellung steht. Als Olefine seien beispielsweise genannt: Ethen, Propen, n-Buten-1, Isobuten-1, n-Penten-1, 3-Methylbuten-1, n-Hexen-1, 4-Methylpenten-1, 3,3-Dimethylbuten-1, n-Hepten-1, 4-Methylhexen-1, n-Hepten-1, 5-Methylhexen-1, 4,4-Dimethylpenten-1, n-Okten-1, 2,4,4-Trimethylpenten-1, 2,4,4-Trimethylpenten-2, Diisobuten (Isomerengemisch aus ca. 80 % 2,4,4-Trimethylpenten-1 und ca. 20 % 2,4,4-Trimethylpenten-2), 4,4-Dimethylhexen-1, Decen-1 (Gulftene 10*), Dodecen-1 (Gulftene 12*), Tetradecen-1 (Gulftene 14*), Hexadecen-1 (Gulftene 16*), Oktadecen-1 (Gulftene 18*), $C_{20}$-Olefin-1, $C_{22}$-Olefin-1, $C_{24}$-Olefin-1, $C_{20}$-$C_{24}$-Olefin-1-Fraktion (Gulftene 20-24*), $C_{26}$-Olefin-1, $C_{28}$-Olefin-1, $C_{24}$-$C_{28}$-Olefin-1-Fraktion (Gulftene 24-28*), $C_{30}$-Olefin-1 (Gulftene 30+*), $C_{40}$-Olefin-1 sowie Mischungen untereinander. Als Cycloolefine seien beispielsweise genannt Cyclobuten, Cyclopenten, Cyclohexen, Cyclohepten, Cycloocten.

Bei Verwendung von Olefinen und/oder Cycloolefinen in Kombination mit Alkylvinylethern und/oder Cycloalkylvinylethern werden die Olefine und/oder Cycloolefine im allgemeinen in Mengen von 0 bis 80 Mol.%, vorzugsweise 1 bis 80 Mol.%, insbesondere 1 bis 60 Mol.%, bezogen auf die Summe von Vinylether und Olefin und/oder Cycloolefin eingesetzt.

Als Comonomer Maleinsäureanhydrid kann die übliche am Markt erhältliche Qualität Verwendung finden. Es ist jedoch auch möglich ein Maleinsäureanhydrid einzusetzen, das bis zu 20 % andere olefinisch ungesättigte Dicarbonsäureanhydride wie beispielsweise Itaconsäure-, Glutaconsäure-, Methylenmaleinsäure-, Citraconsäureanhydrid enthält. Die genannten Nebenprodukte polymerisieren mit Alkylvinylethern und Olefinen ebenfalls im molaren Verhältnis.

Die alternierenden Copolymeren weisen Molmassen von 500 bis 20 000 g/mol, vorzugsweise 800 bis 10 000 g/mol, auf.

Die Herstellung erfolgt nach bekannten üblichen Polymerisationsverfahren wie Masse-, Suspensions-, Fällungs- und Lösungspolymerisation und Initiierung mit üblichen Radikalspendern wie beispielsweise Acetylcyclohexansulfonylperoxid, Diacetylperoxidicarbonat, Dicyclohexylperoxidicarbonat, Di-2-Ethylhexylperoxidicarbonat, tert.-Butylperneodecanoat, 2,2′Azobis(4-methoxi-2,4-dimethylvaleronitril), tert.-Butylperpivalat, tert.-Butylper-2-ethyl-hexanoat, tert.-Butylpermaleinat, 2,2′Azobis(iso butyronitril), Bis-(tert.-Butylperoxid)-cyclohexan, tert.-Butylperoxiisopropylcarbonat, tert.-Butylperacetat, Dicumylperoxid, Di-tert.-Amylperoxid, Di-tert.-Butylperoxid, p-Methanhydroperoxid, Cumolhydroperoxid und tert.-Butylhydroperoxid und Mischungen untereinander. Üblicherweise werden diese Initiatoren in Mengen von 0,1 bis 10 Gew.%, vorzugsweise 0,2 bis 5 Gew.%, berechnet auf die Monomeren Vinylether und gegebenenfalls Olefin und/oder Cycloolefin + Maleinsäureanhydrid, eingesetzt.

*) Handelsprodukte der Firma Gulf Oil Chemical Company, USA

Üblicherweise erfolgt die Copolymerisation bei Temperaturen von 40 bis 250 ° C, vorzugsweise 80 bis 220 ° C, wobei bei Verwendung von Olefinen oder Cycloolefinen oder von Vinylethern und gegebenenfalls Olefinen und/oder Cycloolefinen (nachstehend soll der Ausdruck "Olefin" bzw. "Olefine" im Zusammenhang mit den erfindungsgemäßen Copolymeren die gegebenenfalls zu verwendenden Cycloolefine mitumfassen) mit Siedetemperaturen unterhalb der Polymerisationstemperatur zweckmäßig unter Druck gearbeitet wird. Die Polymerisation wird zweckmäßig unter Luftausschluß, d.h., wenn nicht unter Siedebedingungen gearbeitet werden kann, unter Inertisierungsmittel wie beispielsweise Stickstoff durchgeführt, da Luftsauerstoff die Polymerisation verzögert. Durch Mitverwendung von Redox-Coinitiatoren wie beispielsweise Benzoin, Dimethylanilin, Ascorbinsäure sowie organisch lösliche Komplexe von Schwermetallen wie Kupfer, Kobalt, Mangan, Eisen, Nickel und Chrom kann die Reaktion beschleunigt werden. Die üblicherweise eingesetzten Mengen liegen bei 0,1 bis 2000 Gew.-ppm, vorzugsweise 0,1 bis 1000 Gew.-ppm. Bei der Wahl des Initiators bzw. des Initiatorsystems ist es zweckmäßig, bei der gewählten Polymerisationstemperatur darauf zu achten, daß die Halbwertszeit des Initiators oder des Initiatorsystems weniger als 3 Std. beträgt. Bei 150 ° C ist beispielsweise die Halbwertszeit von tert.-Butylhydroperoxid weniger als 3 Std. Das Initiatorsystem 1 Gew.% tert.-Butylhydroperoxid/5 Gew.-ppm Kupfer-II-Acetylacetonat besitzt dagegen schon bei 100 ° C ein vergleichbares Polymerisationsverhalten wie 1 Gew.% tert.-Butylhydroperoxid bei 150 ° C. Wird beispielsweise bei niedriger Temperatur anpolymerisiert und bei höherer Temperatur auspolymerisiert, wird in der Regel mit 2 oder mehr Initiatoren gearbeitet.

Zur Erzielung niedermolekularer Copolymeren ist es oftmals zweckmäßig in Gegenwart von Reglern zu arbeiten. Geeignete Regler sind beispielsweise Allylalkohole, organische Merkaptoverbindungen wie 2-Merkaptoethanol, 2-Merkaptopropanol, Merkaptoessigsäure, Merkaptopropionsäure, tert.-Butylmerkaptan, n-Butylmerkaptan, n-Octylmerkaptan, n-Dodecylmerkaptan und tert.-Dodecylmerkaptan, die im allgemeinen in Mengen von 0,1 Gew.% bis 10 Gew.% eingesetzt werden.

Die genannten Initiatoren, Co-Initiatoren, Regler und Polymerisationstemperaturen sind für alle Polymerisationsmethoden gleichermaßen einsetzbar. Für die Polymerisation geeignete Apparaturen sind z.B. übliche Rührkessel mit beispielsweise Anker-, Blatt-, Impeller- oder Mehrstufenimpuls-Gegenstrom-Rührer.

Die einfachste Polymerisationsmethode ist die Massepolymerisation. Dabei werden die Olefine bzw. die Vinylether und gegebenenfalls die Olefine und das Maleinsäureanhydrid im molaren Verhältnis in Gegenwart eines Initiators und in Abwesenheit von Lösungsmitteln polymerisiert. Dieses Verfahren ist besonders geeignet für solche Copolymeren, bei denen das verwendete Olefin bzw. der verwendete Vinylether und das gegebenenfalls verwendete Olefin 8 und mehr C-Atome besitzen. Zweckmäßigerweise legt man dabei das Olefin bzw. den Vinylether und gegebenenfalls das Olefin oder auch ein Gemisch verschiedener Olefine bzw. Vinylether und gegebenenfalls Olefine im Reaktor vor, erhitzt unter Rühren auf die gewünschte Polymerisationstemperatur und dosiert das Maleinsäureanhydrid, den Initiator und gegebenenfalls Coinitiator sowie Regler innerhalb 1 bis 10 Std., vorzugsweise 2 bis 5 Std., gleichmäßig zu. Es ist dabei zweckmäßig, den Initiator sowie den Coinitiator getrennt in Form von Lösungen in dem zu copolymerisierenden Olefin bzw. Vinylether und gegebenenfalls Olefin zuzudosieren. Das Maleinsäureanhydrid läßt sich leicht in Form der auf z.B. 70 ° C erhitzten Schmelze zudosieren. Manchmal ist es von Vorteil, Olefin bzw. Vinylether und gegebenenfalls Olefin im Überschuß, z.B. 10 % Überschuß, einzusetzen, um das Maleinsäureanhydrid völlig auszupolymerisieren. Das überschüssige Olefin bzw. der überschüssige Vinylether und gegebenenfalls das überschüssige Olefin können dann durch Destillation, vorzugsweise unter Vakuum, aus der Copolymerisatschmelze entfernt werden. Das Copolymere läßt sich dann zum erfindungsgemäßen Kraftstoffzusatz direkt in der Schmelze oder auch nach Verdünnen mit einem geeigneten Lösungsmittel umsetzen.

Weitere Methoden zur einfachen Herstellung von Copolymeren des Maleinsäureanhydrids mit Olefinen bzw. mit Vinylethern und gegebenenfalls Olefinen sind die Fällungs- und Suspensionspolymerisation. Bei der Fällungspolymerisation werden solche Lösungsmittel eingesetzt, in denen die Monomeren Olefin bzw. Vinylether und gegebenenfalls Olefin und Maleinsäureanhydrid, löslich und das gebildete Copolymere unlöslich ist und ausfällt. Solche Lösungsmittel sind beispielsweise aromatische Kohlenwasserstoffe wie Benzol, Toluol, o-Xylol, m-Xylol, p-Xylol sowie die technischen Xylolgemische, Ethylbenzol, Cumol sowie Halogenwasserstoffe wie Methylenchlorid, 1,1- und 1,2-Dichlorethan, 1,1,1-Trichlorethan, 1,1,2-Trichlorethylen, 1,1,2-Trichlorethan, Perchlorethylen, 1,2-Dichlorpropan, Butylchlorid, 1,1,2-Trichlor-1,2,2-trifluorethan, 1,1,1,2-Tetrachlor-2,2-difluorethan, 1,1,2,2-Tetrachlor-1,2-difluorethan und Ether wie Diethylether, Dipropylether, Dibutylether, Methyl-tert.-butylether,Diethylenglykoldimethylether und Mischungen untereinander. Bei der Suspensionspolymerisation werden solche Lösungsmittel eingesetzt, in denen alle oder mindestens eines der Monomeren und die gebildeten Polymeren unlöslich sind. Hierfür geeignet sind geradkettige und verzweigte aliphatische und cycloaliphatische Kohlenwasserstoffe. Vorzugsweise seien beispielsweise genannt Pentan, Hexan, Heptan, Octan, Isooctan, Cyclohexan, Methylcyclohexan, Ethylcyclohexan, Dimethylcyclohexan, Diethylcyclohexan und Mischungen untereinander. Bei der Durchführung der Fällungspolymerisation ist es zweckmäßig, besonders wenn bei Konzentrationen über 40 Gew.% gearbeitet wird, und bei der Suspensionspolymerisation ist es zwingend notwendig, in Gegenwart eines Schutzkolloids zu arbeiten zur Verhinderung der Aggregatbildung. Als Schutzkolloide sind polymere Stoffe geeignet, die in den Lösungsmitteln gut löslich sind und keine Reaktion mit den Monomeren eingehen. Geeignet sind beispielsweise Copolymere des Maleinsäureanhydrids mit Vinylalkylethern und/oder Olefinen mit 8 bis 20 C-Atomen sowie deren Monoester mit $C_{10}$- bis $C_{20}$-Alkoholen oder Mono- und Diamide mit $C_{10}$- bis $C_{20}$-Alkylaminen sowie Polyalkylvinylether, deren Alkylgruppe 1 bis 20 C-Atome enthält, wie beispielsweise Polymethyl-, Polyethyl-, Polyisobutyl- sowie Polyoktadecylvinylether. Die zugesetzten Mengen an Schutzkolloid liegen üblicherweise bei 0,05 bis 4 Gew.% (berechnet auf eingesetzte Monomere), vorzugsweise 0,1 bis 2 Gew.%, wobei es oftmals von Vorteil ist, mehrere Schutzkolloide zu kombinieren. Bei der Polymerisation ist es zweckmäßig, das Lösungsmittel, das Schutzkolloid und ein Monomeres im Reaktor vorzulegen und bei gewählter Polymerisationstemperatur unter intensivem Rühren das Comonomer und den Initiator sowie gegebenenfalls den Coinitiator und Regler zuzudosieren. Dabei ist es im allgemeinen unwesentlich, ob das Maleinsäureanhydrid vorgelegt wird und die Olefine bzw. die Vinylether und gegebenenfalls Olefine zudosiert werden, oder ob die Olefine bzw. die Vinylether und gegebenenfalls Olefine vorgelegt werden und das Maleinsäureanhydrid zudosiert wird. Natürlich ist es auch möglich, nur das Lösungsmittel und das Schutzkolloid vorzulegen und die Monomeren - Olefin bzw. Vinylether und gegebenenfalls Olefin + Maleinsäureanhydrid - gemeinsam zuzudosieren. Die Zulaufzeiten für Monomer und Initiator sind im allgemeinen zwischen 1 und 10 Std., vorzugsweise 2 und 5 Std. Es ist auch möglich, alle Einsatzstoffe gemeinsam in einem Reaktor zu polymerisieren, wobei jedoch Probleme mit der Wärmeabführung auftreten können, so daß eine solche Arbeitsweise weniger zweckmäßig ist. Die Konzentrationen der zu polymerisierenden Monomeren liegen zwischen 20 und 80 Gew.%, bevorzugt 30 bis 70 Gew.%. Aus den Polymerisatsuspensionen können direkt in Verdampfern wie beispielsweise Bandtrocknern, Schaufeltrocknern, Sprühtrocknern und Wirbelbett-Trocknern die Polymeren isoliert werden. Beim Arbeiten in geeigneten Lösungsmitteln, die Kraftstoffen direkt zugesetzt werden können, kann die weitere Umsetzung zum Alkali- bzw. Erdalkalisalz und Ester und/oder Amid und/oder Ammoniumsalz direkt in der Suspension durchgeführt werden. Die Fällungs- und Suspensionspolymerisation ist besonders geeignet zur Herstellung von Copolymerisaten aus Maleinsäureanhydrid und Olefinen mit 2 bis etwa 10 C-Atomen bzw. niederkettigen Vinylethern. Falls höherkettige Olefine bzw. höherkettige Vinylether und gegebenenfalls Olefine verwendet werden, kann bereits der Fall eintreten, daß die gebildeten Copolymeren im Lösungsmittel löslich sind, so daß die Polymerisation bereits als Lösungsmittelpolymerisation anzusehen ist, wie sie nachstehend näher beschrieben wird, während bei Verwendung von kurzkettigen Olefinen bzw. Vinylethern und gegebenenfalls Olefinen die gebildeten Copolymeren im gleichen Lösungsmittel noch gut ausfallen.

Die Lösungspolymerisation wird durchgeführt in Lösungsmitteln, in denen die Monomeren und die gebildeten Copolymeren löslich sind. Es sind hierfür alle Lösungsmittel geeignet, die diese Vorgabe erfüllen und die mit den Monomeren keine Reaktionen eingehen. Beispielsweise sind dies Aceton, Methylethylketon, Diethylketon, Methylisobutylketon, Ethylacetat, Butylacetat, Tetrahydrofuran und Dioxan, wobei zur Erzielung niedermolekularer Copolymerer Tetrahydrofuran und Dioxan besonders gut geeignet sind. Wie bei der Masse-, Suspensions- und Fällungspolymerisation ist es auch hier zweckmäßig, das Lösungsmittel und eine Monomerkomponente vorzulegen und die zweite Komponente mit dem Initiator und gegebenenfalls Co-Initiator und Regler zuzudosieren. Dabei können Lösungsmittel und Maleinsäureanhydrid im Polymerisationsreaktor vorgelegt und nach Erreichen der Polymerisationstemperatur dann das Olefin bzw. der Vinylether und gegebenenfalls das Olefin und der Initiator sowie gegebenenfalls Coinitiator und Regler zudosiert werden. Günstiger ist es jedoch, Lösungsmittel und Olefin bzw. Vinylether und gegebenenfalls Olefin vorzulegen und das Maleinsäureanhydrid sowie den Initiator und gegebenenfalls den Coinitiator und Regler bei der gewählten Polymerisationstemperatur zuzudosieren. Diese Arbeitsweise liefert weniger gefärbte Polymerlösungen. Die Konzentrationen der zu polymerisierenden Monomeren liegen zwischen 20 und 80 Gew.%, bevorzugt 30 und 70 Gew.%. Das feste Copolymer kann problemlos durch Verdampfen des Lösungsmittels isoliert werden. Aber auch hier ist es zweckmäßig, ein Lösungsmittel zu wählen, in dem die weitere Umsetzung zum Alkali- bzw. Erdalkalisalz mit Alkoholen und/oder Aminen erfolgen kann.

Die in der ersten Verfahrensstufe erhaltenen Copolymeren aus Olefinen bzw. aus Vinylethern und gegebenenfalls Olefinen und Maleinsäureanhydrid werden anschließend ganz oder teilweise zu den Alkalimetallsalzen umgesetzt und, falls die Umsetzung zu den Alkalimetallsalzen nur teilweise erfolgt, mit Alkoholen und/oder Aminen zu den Estern und/oder Aminen und/oder Ammoniumsalzen umgesetzt. Es ist jedoch ebenso möglich, die anschließende Umsetzung der Copolymeren in umgekehrter Reihenfolge durchzuführen, indem die Copolymeren zunächst mit Aminen und/oder Alkoholen zu den entsprechenden Estern und/oder Amiden und/oder Ammoniumsalzen umgesetzt werden und danach in die Alkalimetallsalze

übergeführt werden.

Für die Umsetzung der Copolymeren zu den Estern und/oder Amiden und/oder Ammoniumsalzen werden Alkohole und/oder Amine mit bis zu 50 C-Atomen verwendet.

In der Regel werden Amine der allgemeinen Formel

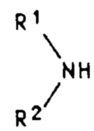

verwendet, in der $R^1$ und $R^2$ gleiche oder unterschiedliche unsubstituierte oder substituierte, gegebenenfalls einfach olefinisch ungesättigte Kohlenwasserstoffreste bedeuten, die im allgemeinen 1 bis 25, vorzugsweise 5 bis 25 C-Atome aufweisen, oder in der $R^1$ für H- steht und $R^2$ einen unsubstituierten oder substituierten, gegebenenfalls einfach olefinisch ungesättigten Kohlenwasserstoffrest mit im allgemeinen 1 bis 50, vorzugsweise 5 bis 50, insbesondere 8 bis 30 C-Atomen bedeutet. Geeignete Amine sind z.B. Di-2-ethylhexylamin, Dioleylamin. Mit besonderem Vorteil werden Isotridecylamin und Diisotridecylamin verwendet.

Für die Veresterung der Copolymeren aus Olefinen bzw. aus Vinylethern und gegebenenfalls Olefinen und Maleinsäureanhydrid werden im allgemeinen Alkohole mit 1 bis 50 C-Atomen, vorzugsweise 4 bis 40 C-Atomen, insbesondere 5 bis 30 C-Atomen verwendet. Bei ausreichend langem $\alpha$-Olefin des Copolymeren sind auch mehrwertige Alkohole wie z.B. Neopentylglykol oder Pentaerythrit vorteilhaft.

Im allgemeinen werden die Carboxylgruppen der Copolymeren aus Olefinen bzw. aus Vinylethern und gegebenenfalls Olefinen und Maleinsäureanhydrid zu 5 bis 80 %, vorzugsweise 10 bis 70 %, insbesondere 15 bis 60 % zu den Amiden und/oder Ammoniumsalzen und/oder Estern umgesetzt. Die Umsetzung der Copolymeren aus Olefinen bzw. aus Vinylethern und gegebenenfalls Olefinen und Maleinsäureanhydrid mit den Aminen und/oder Alkoholen erfolgt im allgemeinen in der Schmelze oder nach Verdünnen mit einem geeigneten Lösungsmittel. Als Lösungsmittel kommen beispielsweise die vorstehend für die Herstellung der Copolymeren aus Olefinen bzw. Vinylethern und gegebenenfalls Olefinen und Maleinsäureanhydrid durch Fällungs-, Suspensions- und Lösungspolymerisation genannten Lösungsmittel in Betracht. Vorzugsweise werden aromatische, aliphatische oder cycloaliphatische Kohlenwasserstoffe eingesetzt.

Bei der Umsetzung mit den Aminen werden im allgemeinen Temperaturen von 20 bis 150 °C, vorzugsweise 20 bis 120 °C, insbesondere 30 bis 100 °C angewendet. Die Veresterung mit den Alkoholen erfolgt in der Regel bei Temperaturen von 20 bis 200 °C, vorzugsweise 80 bis 200 °C.

Im einzelnen geht man beispielsweise bei der Umsetzung mit den Aminen so vor, daß man das Copolymere aus Olefinen bzw. aus Vinylethern und gegebenenfalls Olefinen und Maleinsäureanhydrid z.B. in einem Reaktionsgefäß, beispielsweise in geschmolzener Form oder in einem Lösungsmittel, vorlegt und unter Rühren bei Temperaturen von 60 bis 90 °C das Amin einträgt und 1 bis 2 Std. unter Rühren umsetzt. Dabei erhält man in der Regel das Halbamid, bei dem bei überschüssiger Aminzugabe die verbleibende Carboxylgruppe als Alkylammoniumsalz vorliegt.

In entsprechender Weise kann auch die Veresterung der Copolymeren aus Olefinen bzw. aus Vinylethern und gegebenenfalls Olefinen und Maleinsäureanhydrid mit den Alkoholen erfolgen, wobei die Veresterung thermisch oder durch saure Katalyse, z.B. durch Phosphorsäure, erfolgen kann. Dabei erhält man in der Regel Halbester, die man als solche oder nach Teilamidierung oder Teilneutralisation der verbleibenden Carboxylgruppen mit Aminen für die weitere Umsetzung zu den Alkalisalzen einsetzen kann.

Die erhaltenen Amide und/oder Ester und/oder Ammoniumsalze der Copolymeren von Olefinen bzw. von Vinylethern und gegebenenfalls Olefinen und Maleinsäureanhydrid werden zur überführung der verbleibenden Carboxylgruppen in die Alkalimetallsalze mit einer basischen Alkalimetallverbindung, z.B. den Hydroxiden, Carbonaten oder Alkoholaten, umgesetzt. Beispielsweise werden zur Herstellung der Kaliummetallsalze die Lösungen der Amide und/oder Ester und/oder Ammoniumsalze der Copolymeren von Olefinen bzw. von Vinylethern und gegebenenfalls Olefinen und Maleinsäureanhydrid mit der berechneten Menge Kaliumverbindung, z.B. einer Lösung von KOH oder $KOCH_3$ zweckmäßig in Alkoholen, z.B. einem $C_1$- bis $C_6$-Alkohol wie Methanol, Ethanol, Propanol, Butanol, umgesetzt. Aus dem erhaltenen Reaktionsgemisch werden die Lösungsmittel und gebildetes Wasser zweckmäßig im Vakuum abgezogen.

Als Alkalimetallsalze kommen die Lithium-, Natrium-, Kalium-, Rubidium-, Cäsiumsalze in Betracht, wobei die Kaliumsalze bevorzugt verwendet werden. Der Alkalimetallanteil in den erfindungsgemäßen Kraftstoffzusätzen beträgt, bezogen auf den Kraftstoffzusatz im allgemeinen mindestens 3 Gew.%, vorzugsweise 3 bis 25 Gew.%, insbesondere 4 bis 20 Gew.%, mit besonderem Vorteil 4 bis 15 Gew.%.

Die neuen Kraftstoffzusätze werden den Kraftstoffen für Ottomotoren in der Regel in Mengen von 10 bis

2000 Gew. -ppm, vorzugsweise von 50 bis 1000 Gew.-ppm zugegeben.

Die erfindungsgemäßen Kraftstoffe können neben den Alkalimetallsalzen zusätzlich noch bekannte Antioxidantien auf Phenol- oder Aminbasis enthalten. Insbesondere ist es vorteilhaft, Kraftstoffzusätze zur Reinigung und Reinhaltung des Einlaßsystems mit phenolischen Antioxidantien zur Erhöhung der Lagerstabilität der Kraftstoffe zu kombinieren.

Als gute Lösungsmittel bzw. Lösungsvermittler für die genannten, den Kraftstoff zuzusetzenden Komponenten haben sich Rückstandsöle aus der Oxoalkoholsynthese erwiesen.

Vorzugsweise verwendet man Oxoalkoholrückstände aus der Butanol-, Isobutanol-, Pentanol-, Hexanol-, Heptanol-, Oktanol-, Nonanol-, Dekanol-, Undekanol- oder Dodekanolsynthese. Besonders vorteilhaft ist die Verwendung von Oxoalkoholrückständen aus der Butanolsynthese. Daneben sind auch andere Lösungsmittel bzw. Lösungsmittelgemische verwendbar, die eine homogene Mischung der Komponenten in den weiter oben genannten Gewichtsverhältnissen ergeben. Die Wirkung der erfindungsgemäßen Benzinzusatze ist nicht nur auf Fahrbenzine beschränkt. Es hat sich gezeigt, daß man sie auch in Flugbenzinen verwenden kann, insbesondere in Flugbenzinen für Kolbenmotoren. Desgleichen wirken die erfindungsgemäßen Verbindungen nicht nur in Vergasermotoren, sondern auch bei Motoren mit Einspritzanlagen für den Kraftstoff.

Die mit dem neuen Zusatz versehenen Kraftstoffe können noch weitere, übliche Zusätze, z.B. oktanzahlverbessernde Zusätze oder auch sauerstoffhaltige Komponenten, z.B. Methanol, Ethanol oder Methyltertiärbutylether enthalten.

Die nachfolgenden Beispiele erläutern die Erfindung.

In den Beispielen 1 bis 5 wird die Herstellung der Copolymeren aus Olefinen und Maleinsäureanhydrid, in den Beispielen 6 bis 12 die Herstellung der Copolymeren aus Vinylethern bzw. Vinylethern plus Olefinen und Maleinsäureanhydrid beschrieben.

Die angegebenen Teile sind Gewichtsteile. Die Molmassen wurden durch Gelpermeationschromatographie bestimmt, wobei als Elutionsmittel Tetrahydrofuran und zur Eichung eng verteilte Fraktionen von Polystyrol eingesetzt wurden.

Beispiel 1

In einem Edelstahldruckrührkessel von 5 l Inhalt wurden 980 Teile Maleinsäureanyhdrid, 1440 Teile technisches Xylol und 14 Teile Polyvinylether vom K-Wert 50 (gemessen 1 gew.%ig in Cyclohexanon bei 25°C) vorgelegt, dreimal mit 3 bar Stickstoff abgepreßt und auf 140°C erhitzt. Anschließend wurden 600 Teile Isobuten innerhalb 3 Std. und eine Lösung aus 46,2 Teilen tert.-Butyl-2-perethylhexanoat und 30,8 Teilen Ditert.-butylperoxid in 100 Teilen Xylol innerhalb 3,5 Std. gleichmäßig in den Rührkessel dosiert und anschließend noch 1 Std. nacherhitzt. Anschließend wurde unter Abdestillation von Xylol vorsichtig entspannt und gegen Ende der Xyloldestillation unter Anlegen von Vakuum abdestilliert. Bei 140°C fiel das Polymer als Schmelze an. Nach Abkühlen lag das Polymer als hellbraunes, sprödes Harz vor, dessen Molmasse 2500 g/mol betrug.

Beispiel 2

In einem Reaktor wie bei Beispiel 1 wurden 1612,5 Teile Diisobuten und 73,5 Teile Maleinsäureanhydrid vorgelegt, dreimal mit 3 bar Stickstoff abgepreßt und auf 160°C erhitzt. Danach wurden innerhalb 3 Std. 1396,5 Teile Maleinsäureanhydrid und innerhalb 4 Std. eine Lösung von 150 Teilen Ditert.-butylperoxid in 94,5 Teilen Diisobuten gleichmäßig zudosiert. Anschließend wurde noch 1 Std. nacherhitzt. Anschließend wurde vorsichtig entspannt und das überschüssige Diisobuten abdestilliert, gegen Ende durch Anlegen von Vakuum. Bei 150°C lag das molare Copolymere aus Maleinsäureanhydrid und Diisobuten als Schmelze vor. Nach Erstarren lag das Copolymere als sprödes Harz vor. Die Molmasse betrug 2040 g/mol.

Beispiel 3

In einem 4 l Glasrührkolben wurden 1500 Teile Oktadecen-1 vorgelegt und im schwachen Stickstoffstrom auf 190°C erhitzt. Nun wurden innerhalb 2 Std. 588 g Maleinsäureanhydrid in flüssiger Form und eine Lösung von 21 Teilen Ditert.-butylperoxid in 42,8 Teilen Oktadecen-1 zudosiert. Danach wurde noch 2 Std. nacherhitzt und die viskose Polymerschmelze auf ein Blech entleert, wobei sie zu einem spröden bräunlichen Harz erstarrte. Die Molmasse betrug 4800 g/mol.

Beispiel 4

In einem 4 l Glasrührkolben wurden 1195 Teile eines $C_{20}$-$C_{24}$-Olefin-1-Gemisches (Gulftene $C_{20}$-$C_{24}$) im schwachen Stickstoffstrom auf 190°C erhitzt und 392 Teile Maleinsäureanhydrid und 16 Teile Ditert.-butylperoxid in 4 Std. gleichmäßig zudosiert und anschließend noch 2 Std. nacherhitzt. Anschließend wurde die gelbliche, viskose Schmelze auf ein Blech entleert, wobei sie zu einem gelben, spröden Harz erstarrte. Die Molmasse betrug 8900 g/mol.

Beispiel 5

In einem Glasrührkolben wurden 1671,4 Teile eines $C_{30}$-Olefins (Gulftene 30+) im schwachen Stickstoffstrom auf 180°C erhitzt und innerhalb 4 Std. 392 Teile Maleinsäureanhydrid und 20,5 Teile Ditert.-butylperoxid gleichmäßig zudosiert. Anschließend wurde noch 2 Std. nacherhitzt und die viskose gelbe Schmelze auf ein Blech entleert, wobei sie zu einem gelben spröden Harz erstarrte. Die Molmasse betrug 1600 g/mol.

Beispiel 6

In einem Glasrührkolben mit Rückflußkühler wurden 98 Teile Maleinsäureanhydrid und 300 Teile Tetrahydrofuran auf 70°C zum Sieden erhitzt und innerhalb 4 Std. 100 Teile Isobutylvinylether und eine Lösung von 200 Teilen Tetrahydrofuran und 10 Teilen tert.-Butylperpivalat, 76 gew.%ig in Dimethylphthalat gleichmäßig unter Sieden zudosiert. Anschließend wurde noch 2 Std. am Rückfluß erhitzt. Nach dem Abkühlen lag das Copolymere als 28 gew.%ige Lösung in Tetrahydrofuran vor. Das Molgewicht betrug 1800.

Beispiel 7

Man verfuhr wie in Beispiel 1 nur wurden anstelle von Isobutylvinylether 128 Teile 2-Methylpentyl-1-vinylether eingesetzt. Nach Abkühlen lag das Copolymere als 31 gew.%ige Lösung in Tetrahydrofuran vor. Das Molgewicht betrug 2100.

Beispiel 8

In einer wie im Beispiel 1 beschriebenen Apparatur wurden 98 Teile Maleinsäureanhydrid, 200 Teile technisches Xylol, 5 Teile Polyethylether vom K-Wert 50 (gemessen bei 25°C 1 gew.%ig in Cyclohexanon) auf 140°C bis zum Sieden erhitzt und innerhalb 5 Std. eine Lösung von 212 Teilen n-Dodecylvinylether und 10 Teilen Ditertiärbutylperoxid in 200 Teilen technisches Xylol zudosiert und anschließend noch 2 Std. am Rückfluß erhitzt. Das Copolymere lag als 43 gew.%ige viskose Suspension sehr feiner Polymerteilen von ca. 3 $\mu$ Durchmesser vor. Das Molgewicht betrug 3200.

Beispiel 9

In einer wie in Beispiel 1 beschriebenen Apparatur wurden 250 Teile technisches Xylol und 295 Teile n-Oktadecylvinylether auf ca. 148°C bis zum Sieden erhitzt und parallel innerhalb 3 Std. Lösungen von 98 Teilen Maleinsäureanhydrid in 300 Teilen technisches Xylol und 9 Teilen Ditertiärbutylperoxid in 51 Teilen technisches Xylol zudosiert. Während des Zulaufes fiel die Siedetemperatur von anfangs 148°C auf 138°C ab. Anschließend wurde noch 2 Std. nacherhitzt. Das Copolymere lag als gelbe, viskose Lösung vor mit einem Feststoffgehalt von 42 Gew.%. Das Molgewicht betrug 2200.

Beispiel 10

In einer wie in Beispiel 1 beschriebenen Apparatur wurden 182 Teile eines $C_{24}$- bis $C_{28}$-Olefins (Gulftene $C_{24}$-$C_{28}$) und 200 Teile technisches Xylol bis zum Sieden auf 150°C erhitzt und anschließend innerhalb 4 Std. eine Lösung von 50 Teilen Vinylisobutylether und 10 Teilen Ditertiärbutylperoxid in 100 Teilen technisches Xylol sowie eine Lösung von 98 Teilen Maleinsäureanhydrid in 300 Teilen technisches Xylol zudosiert. Der Siedepunkt fiel während des Zulaufs von anfangs 150°C auf 134°C ab. Anschließend wurde noch 2 Std. am Rückfluß nacherhitzt. Das Copolymere lag als 28 gew.%ige gelbliche, schwach viskose Lösung vor. Das Molgewicht betrug 4800.

Beispiel 11

In einer wie in Beispiel 1 beschriebenen Apparatur wurden 236,8 Teile n-Oktadecylvinylether und 30,4 Teile n-Oktadecen-1 auf 170 °C unter Stickstoff erhitzt und anschließend innerhalb 3 Std. 98 Teile flüssiges Maleinsäureanhydrid und 12 Teile Ditertiärbutylperoxid gelöst in 20 Teilen n-Octadecen gleichmäßig zudosiert. Anschließend wurde noch 2 Std. nacherhitzt und die klare, bräunliche Schmelze auf ein Blech entleert, wobei sie zu einem spröden Harz erstarrte. Das Molgewicht betrug 4500.

Beispiel 12

In einer wie in Beispiel 1 beschriebenen Apparatur wurden 246,4 Teile eines $C_{20}$- bis $C_{24}$-Olefingemisches (Gulftene $C_{20}$-$C_{24}$), 25,6 Teile 2-Methylpentyl-1-Vinylether und 200 Teile technisches Xylol auf ca. 150 °C zum Sieden erhitzt und 98 Teile Maleinsäureanhydrid gelöst in 300 Teilen Xylol sowie eine Lösung von 12 Tertiärbutylhydroperoxid in 100 Teilen technisches Xylol in 4 Std. zudosiert. Anschließend wurde noch 2 Std. unter Sieden erhitzt bei einer Siedetemperatur von 136 °C. Das Copolymere lag als 38 gew.%ige Lösung vor. Das Molgewicht betrug 3600.

Beispiele 13 bis 30

Die in den Beispielen 1 bis 12 erhaltenen Copolymeren wurden gemäß den Beispielen 13 bis 30 in die erfindungsgemäßen Kraftstoffzusätze übergeführt, indem sie zunächst mit Aminen oder Alkoholen zu den entsprechenden Amiden oder Estern und danach zu den entsprechenden Kaliumsalzen umgesetzt wurden, oder indem sie zunächst zu den Kaliumsalzen umgesetzt wurden und anschließend mit Aminen oder Alkoholen zu den Amiden oder Estern umgesetzt wurden bzw. indem sie (Beispiele 24 und 29) nur zu den Kaliumsalzen umgesetzt wurden.

Für die Umsetzung zu den Amiden wurden die Copolymeren aus den Beispielen 1 bis 12 in n-Hexan oder Xylol gelöst und die Amine bei Temperaturen von 30 bis 100 °C zu den Copolymeren unter Rühren hinzugegeben. Anschließend wurde noch 1 bis 2 Stunden nachgerührt.

Entsprechend wurden die Ester durch thermische oder sauer katalysierte Umsetzung (Zugabe von 0,1 Gew.% Phosphorsäure) der Copolymeren mit den entsprechenden Alkoholen bei Temperaturen von 70 bis 140 °C, vorzugsweise 90 bis 110 °C, erhalten. Der Reaktionsverlauf der Amid- und Esterbildung wurde im IR-Spektrum verfolgt.

Zur Herstellung der Kaliumsalze wurden Lösungen der Copolymeren bzw. die Amide bzw. Ester der Copolymere enthaltenden Reaktionslösungen mit 20 gew.%iger ethanolischer KOH-Lösung, die die berechnete KOH-Menge enthielt, versetzt, und aus dem erhaltenen Gemisch wurden im Vakuum bei Temperaturen von 70 bis 90 °C das Lösungsmittel und das gebildete Wasser abdestilliert.

In der Tabelle sind die Einzelheiten der Reaktionsbedingungen in den Beispielen 13 bis 30 angegeben. MSA steht für Maleinsäureanhydrid. Die Mol-Angaben beziehen sich auf 100 g Copolymeres.

Tabelle

| Beispiel | Copolymer aus Beispiel | Anteil des Comonomeren im Copolymeren: MSA [Gew.%] | Anteil des Comonomeren im Copolymeren: Olefin bzw. Alkylvinylether R-O-CH=$CH_2$ + ggf. Olefin [Gew.%] | Mol MSA in 100 g Copolymerem | MSA-Umsetzung/100 g Polymer: mit Amin gebildetes Amid [Mol] | MSA-Umsetzung/100 g Polymer: mit Alkoholen gebildeter Ester [Mol] | Neutralisation der verbliebenen Carboxylgruppen mit KOH [Mol] | Kaliumgehalt [Gew.%] bezogen auf erfindungsgemäßes Endprodukt |
|---|---|---|---|---|---|---|---|---|
| 13 | 1 | 63,6 | Isobuten 36,4 | 0,65 | $C_{13}H_{27}NH_2$ 0,25 | $C_8H_{17}$-OH 0,65 | 0,4 | 6,5 |
| 14 | 2 | 46,7 | Diisobuten 53,3 | 0,48 | $(C_{13}H_{27})_2NH$ 0,24 | - | 0,24 | 10,0 |
| 15 | 3 | 28,0 | $C_{18}$-Olefin 72,0 | 0,29 | $C_{13}H_{27}NH_2$ 0,05 | $C_{13}H_{27}$-OH 0,29 | 0,24 | 5,2 |
| 16 | 4 | 24,1 | $C_{20}$-$C_{24}$-Olefin 75,9 | 0,25 | $C_{13}H_{27}NH_2$ 0,325 | - | 0,175 | 4,76 |
| 17 | 5 | 18,9 | $C_{30}$-Olefin 81,1 | 0,19 | $(C_{13}H_{27})_2NH$ 0,250 | - | 0,13 | 4,13 |
| 18 | 4 | 24,1 | $C_{20}$-$C_{24}$-Olefin | 0,25 | - | Neopentylglykol 0,05 $C_{13}H_{27}$-OH 0,15 | 0,30 | 7,85 |
| 19 | 6 | 49,5 | R = Butyl- 50,5 | 0,505 | $(C_{13}H_{27})_2NH$ 0,202 | - | 0,808 | 14,3 |
| 20 | 6 | 49,5 | R = Butyl- 50,5 | 0,505 | - | $C_{13}H_{17}$-OH 0,3257 | 0,6843 | 13,56 |

Tabelle - Forts.

| Beispiel | Copolymer aus Beispiel | Anteil des Comonomeren im Copolymeren: MSA [Gew.%] | Anteil des Comonomeren im Copolymeren: Olefin bzw. Alkylvinylether $R-O-CH=CH_2$ + ggf. Olefin [Gew.%] | Mol MSA in 100 g Copolymerem | MSA-Umsetzung/100 g Polymer: mit Amin gebildetes Amid [Mol] | MSA-Umsetzung/100 g Polymer: mit Alkoholen gebildeter Ester [Mol] | Neutralisation der verbliebenen Carboxylgruppen mit KOH [Mol] | Kaliumgehalt [Gew.%] bezogen auf erfindungsgemäßes Endprodukt |
|---|---|---|---|---|---|---|---|---|
| 21 | 7 | 43,4 | R = 2-methyl-pentyl- 56,6 | 0,443 | $(C_{13}H_{27})_2NH$ 0,2657 | - | 0,62 | 10,2 |
| 22 | 8 | 31,6 | R = Dodecyl- 68,4 | 0,3225 | $(C_{13}H_{27})_2NH$ 0,0774 | - | 0,5675 | 14 |
| 23 | 9 | 24,9 | R = Octadecyl- 75,1 | 0,254 | $(C_{13}H_{27})_2NH$ 0,099 | - | 0,409 | 10 |
| 24 | 9 | 24,9 | R = Octadecyl- 75,1 | 0,254 | - | - | 0,508 | 16 |
| 25 | 10 | 35 | R = Butyl- 18 $C_{24}$-$C_{28}$-Olefin 47 | 0,357 | $(C_{13}H_{27})_2NH$ 0,1018 | - | 0,6125 | 14 |
| 26 | 10 | 35 | R = Butyl- 18 $C_{24}$-$C_{28}$-Olefin 47 | 0,357 | - | $C_{13}H_{27}-OH$ 0,1928 | 0,5218 | 12,48 |
| 27 | 11 | 25,5 | R = Octadecyl- 61,5 Octadecen 13 | 0,2602 | $(C_{13}H_{27})_2NH$ 0,104 | - | 0,4163 | 10 |

Tabelle - Forts.

| Beispiel | Copolymer aus Beispiel | Anteil des Comonomeren im Copolymeren: MSA [Gew.%] | Anteil des Comonomeren im Copolymeren: Olefin bzw. Alkylvinylether R-O-CH=$CH_2$ + ggf. Olefin [Gew.%] | Mol MSA in 100 g Copolymerem | MSA-Umsetzung/100 g Polymer: mit Amin gebildetes Amid [Mol] | MSA-Umsetzung/100 g Polymer: mit Alkoholen gebildeter Ester [Mol] | Neutralisation der verbliebenen Carboxylgruppen mit KOH [Mol] | Kaliumgehalt [Gew.%] bezogen auf erfindungsgemäßes Endprodukt |
|---|---|---|---|---|---|---|---|---|
| 28 | 11 | 25,5 | R = Octadecyl- 61,5<br>Octadecen 13 | 0,2602 | - | Ethylhexanol<br>0,1041 | 0,4163 | 12,2 |
| 29 | 11 | 25,5 | R = Octadecyl- 61,5<br>Octadecen 13 | 0,2602 | - | - | 0,52 | 16,3 |
| 30 | 12 | 27,7 | R = 2-Methylpentyl- 7,2<br>$C_{20}$-$C_{24}$-Olefin 65,1 | 0,2826 | $(C_{13}H_{27})_2NH$<br>0,048 | - | 0,5172 | 14 |

Beispiel 31

Um den günstigen Einfluß der erfindungsgemäßen Kraftstoffe auf das Korrosionsverhalten von Ottomotoren zu zeigen, wird unverbleiter, nicht additivierter Super-Ottokraftstoff (SOK) (Produkt der Erdölraffinerie

Mannheim) einer Korrosionsprüfung gemäß DIN 51 585 bzw. ASTM D 665-60 bzw. IP 135/64 bei einer Temperatur von 23 ° C und einer Prüfzeit von 24 h unterworfen, wobei die erfindungsgemäßen Kraftstoffzusätze aus den Beispielen 13 bis 17 und 19 bis 30 dem Kraftstoff jeweils in Mengen von 10 Gew.-ppm, bezogen auf Kalium, zugesetzt werden. Bei den erfindungsgemäßen Kraftstoffen wird am Stahlfinger keinerlei Korrosion festgestellt. Dagegen wird beim nicht additivierten Kraftstoff der Korrosionsgrad 3 festgestellt.

Beispiel 32

Bei der motorischen Prüfung auf einem Opel Kadett-Motor gemäß CEC F-02-C-79 mit einem Kraftstoff gemäß Beispiel 31, der einen Zusatz von 10 Gew.-ppm, bezogen auf Kalium, der Verbindung gemäß Beispiel 13 enthält, werden die Ventilablagerungen von durchschnittlich 327 mg/Einlaßventil auf 204 mg/Einlaßventil gesenkt. Bei einem entsprechenden Zusatz von 10 Gew.-ppm der Verbindung gemäß Beispiel 26 werden die Ventilablagerungen von durchschnittlich 386 mg/Einlaßventil auf 237 mg/Einlaßventil gesenkt. Hierdurch wird der übliche Additivbedarf zum Schutz und zur Reinhaltung der Einlaßsysteme erheblich gesenkt.

## Patentansprüche

1. Kraftstoffe für Ottomotoren, enthaltend 10 bis 2000 Gew.-ppm Copolymere von Olefinen mit 2 bis 40 C-Atomen und/oder Cycloolefinen mit 3 bis 10 C-Atomen mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe mit Maleinsäureanhydrid und/oder Copolymeren von Alkylvinylethern mit 1 bis 30 C-Atomen in der Alkylgruppe und/oder Cycloalkylvinylethern mit 3 bis 10 C-Atomen in der Alkylgruppe und Olefinen mit 2 bis 40 C-Atomen und/oder Cycloolefinen mit 3 bis 10 C-Atomen mit Maleinsäureanhydrid mit einer Gesamt-Molmasse von 500 bis 20 000 g pro Mol, wobei die Carboxylgruppen der Copolymeren ganz oder teilweise mit Alkali unter Bildung der Alkalimetallsalze umgesetzt sind und der Rest der Carboxylgruppen mit Alkoholen und/oder Aminen mit bis zu 50 C-Atomen zu den entsprechenden Ester- und/oder Amidgruppen und/oder Ammoniumsalzen umgesetzt sind.

2. Kraftstoffe nach Anspruch 1, dadurch gekennzeichnet, daß die Copolymeren einen Gehalt von mindestens 3 Gew.% Alkali aufweisen.

3. Kraftstoffe nach Anspruch 1 und 2, dadurch gekennzeichnet, daß die Carboxylgruppen der Copolymeren unter Bildung der Kaliumsalze umgesetzt sind.

## Claims

1. A fuel for gasoline engines which contains from 10 to 2000 ppm by weight of a copolymer of an olefin of from 2 to 40 carbon atoms or a cycloolefin of from 3 to 10 carbon atoms with maleic anhydride or a copolymer of an alkyl vinyl ether of from 1 to 30 carbon atoms in the alkyl group or a cycloalkyl vinyl ether of from 3 to 10 carbon atoms in the alkyl group with maleic anhydride or a copolymer of an alkyl vinyl ether of from 1 to 30 carbon atoms in the alkyl group or a cycloalkyl vinyl ether of from 3 to 10 carbon atoms in the alkyl group and an olefin of from 2 to 40 carbon atoms or a cycloolefin of from 3 to 10 carbon atoms with maleic anhydride having a total molecular weight of from 500 to 20,000 g per mole, the carboxyl groups on the copolymer having been wholly or partly converted with an alkali metal to form an alkali metal salt and the remaining carboxyl groups having been converted with an alcohol or an amine of up to 50 carbon atoms into the corresponding ester or amide groups or ammonium salts.

2. A fuel as claimed in claim 1, wherein the copolymer contains not less than 3% by weight of alkali metal.

3. A fuel as claimed in claim 1 or 2, wherein the carboxyl groups on the copolymer have been reacted to form a potassium salt.

## Revendications

1. Carburant pour moteur à combustion interne, contenant 10 à 2000 ppm en poids de copolymères

d'oléfines ayant de 2 à 40 atomes de carbone et/ou de cyclooléfines ayant de 3 à 10 atomes de carbone avec de l'anhydride maléique et/ou de copolymères d'oxydes d'alkyle et de vinyle ayant de 1 à 30 atomes de carbone dans le groupement alkyle et/ou d'oxydes de cycloalkyle et de vinyle ayant de 3 à 10 atomes de carbone dans le groupement alkyle avec l'anhydride maléique et/ou de copolymères d'oxydes d'alkyle et de vinyle ayant de 1 à 30 atomes de carbone dans le groupement alkyle et/ou d'oxydes de cycloalkyle et de vinyle ayant de 3 à 10 atomes de carbone dans le groupement alkyle et d'oléfines ayant de 2 à 40 atomes de carbone et/ou de cyclooléfines ayant de 3 à 10 atomes de carbone avec l'anhydride maléique avec une masse molaire totale de 500 à 20 000 g par mole, les groupements carboxy des copolymères ayant été transformés en tout ou en partie par des métaux alcalins avec formation des sels de métaux alcalins et le reste des groupements carboxy ayant été transformés par des alcools et/ou des amines ayant jusqu'à 50 atomes de carbone en les groupements ester et/ou amide et/ou sels d'ammonium correspondants.

**2.** Carburant selon la revendication 1, caractérisé en ce que les copolymères présentent une teneur en métaux alcalins d'au moins 3% en poids.

**3.** Carburant selon les revendications 1 et 2, caractérisé en ce que les groupements carboxy des copolymères ont été transformés avec formation des sels de potassium.